# EUROPEAN PATENT APPLICATION

(11) **EP 4 779 479 A1**
(43) Date of publication of application: **22.07.2026**
(21) Application number: 25152833.7
(22) Date of filing: 20.01.2025
(51) Int. Cl.: G06F 11/3668

(54) **METHOD AND SYSTEM FOR TESTING A VEHICLE FUNCTION**

(71) Applicant: Bayerische Motoren Werke Aktiengesellschaft, 80809 München (DE)
(72) Inventor: Adee, Ahmad, 85716 Unterschleißheim (DE); Mishra, Nishant, 90408 Nürnberg (DE)

(57) **Abstract**

The present document describes a method for testing a vehicle function of a vehicle for use within a second operational design domain, ODD, using a set of test scenarios which represents a first ODD that differs from the second ODD. The method comprises determining a difference measure for a difference between a first model for the first ODD and a second model for the second ODD. Furthermore, the method comprises determining an indicator for an amount of testing that is to be performed for testing the vehicle function for the second ODD using the set of test scenarios for the first ODD based on the difference measure.

## Description

The present document is directed at testing a vehicle function, notably a safety relevant vehicle function.

A vehicle may comprise a vehicle function which is configured to perform an autonomous longitudinal and/or lateral guidance of the vehicle. An example vehicle function is an autonomous parking function which is configured to park the vehicle autonomously within a parking space.

A vehicle function is typically designed, and notably tested, for and/or within a particular operational design domain (ODD). In the example of a parking function, the ODD may e.g., be a public parking space which is located within a public environment. Testing of the vehicle function may be performed using a set of test scenarios which is adapted to the ODD that the vehicle function is designed and/or is to be used for.

The present document is directed at the technical problem of enabling an efficient and reliable adaption of the ODD of a vehicle function. The technical problem is solved by each one of the independent claims. Preferred examples are specified in the dependent claims.

According to an aspect, a method for testing a vehicle function of a (street) vehicle for use within a second operational design domain (ODD) using a set of test scenarios, which represents a first ODD, is described, wherein the first ODD differs from the second ODD. The second ODD may be such that providing test scenarios (with test data) for the second ODD is more difficult than providing test scenarios for the first ODD. The vehicle function may be configured to perform an autonomous longitudinal and/or lateral guidance of the vehicle. In other words, the vehicle function may be configured to perform an autonomous driving of the vehicle.

The method may comprise determining a first (statistical) model for the first ODD and/or determining a second (statistical) model for the second ODD. The first model and/or the second model may comprise, notably may be, a Bayesian network. The first model and the second model may comprise a joint set of variables and/or triggering conditions. On the other hand, the first model and the second model may differ with regards to a statistical distribution of one or more of the variables of the set of variables (and/or triggering conditions).

The joint set of variables (and/or the set of triggering conditions) may comprise
- one or more variables for one or more different types of road users within the environment of the vehicle during execution of the vehicle function;
- one or more variables for the illumination of the environment of the vehicle during execution of the vehicle function; and/or
- one or more variables for the distance of the vehicle to another road user during execution of the vehicle function.

The method comprises determining a difference measure for the (statistical) difference between the first model for the first ODD and the second model for the second ODD. In particular a difference measure for a distribution difference between the first model and the second model may be determined. The difference measure may be determined based on
- a data distribution shift between the first model and the second model;
- a maximum mean discrepancy between the first model and the second model;
- a Kolmogorov-Smirnov test for the first and the second model; and/or
- a Kullback-Leibler divergence.

Furthermore, the method comprises determining (based on the difference measure) an indicator for the amount of testing that is to be performed for testing the vehicle function for the second ODD using the set of test scenarios for the first ODD.

The set of test scenarios for the first ODD may have a statistical distribution (of the set of variables) which matches the first model of the first ODD (i.e., which matches the statistical distribution of the set of variables within the first model) and/or which differs from the second model of the second ODD (i.e., which differs from the statistical distribution of the set of variables within the second model).

In view of this, an extended amount of testing may need to be performed when testing the vehicle function for the second ODD using the set of test scenarios for the first ODD. The extended amount of testing depends on the difference measure, wherein the amount of additional testing typically increases with an increasing difference between the first model of the first ODD and the second model of the second ODD. In particular, an increase in the difference measure (to indicate an increasing difference between the first model of the first ODD and the second model of the second ODD) typically leads to an increase of the (possibly additional) amount of testing that is to be performed.

A first amount of testing may need to be performed for testing the vehicle function for the first ODD using the set of test scenarios for the first ODD (in order to test the vehicle function for the first ODD up to a pre-determined level of safety). The indicator may be indicative of the additional amount of testing that is to be performed on top of the first amount for testing the vehicle function for the second ODD using the set of test scenarios for the first ODD (in order to test the vehicle function for the second ODD up to a pre-determined level of safety). Alternatively, the indicator may be indicative of the second amount of testing that is to be performed for testing the vehicle function for the second ODD using the set of test scenarios for the first ODD (in order to test the vehicle function for the second ODD up to a pre-determined level of safety). The second amount of testing is typically higher than the first amount of testing.

The difference measure may be indicative of a factor, wherein the factor may be applied to the first amount of testing, thereby providing the additional amount of testing that needs to be performed for testing the vehicle function for the second ODD:

The indicator may be indicative of the number of different test scenarios to be used for testing the vehicle function, and/or of the number of hours to be used for testing the vehicle function.

The method may further comprise testing the vehicle function using the set of test scenarios for the first ODD in accordance to the amount that is indicated by the determined indicator.

Hence, a method is described which allows a vehicle function to be tested for a second ODD in an efficient and reliable manner, using test data that is determined (notably that is captured using one or more sensors) for a first ODD, wherein the first ODD differs from the second ODD.

According to a further aspect, a software program is described. The software program may be adapted for execution on a processor and for performing the method steps outlined in the present document when carried out on the processor.

According to another aspect, a storage medium is described. The storage medium may comprise a software program adapted for execution on a processor and for performing the method steps outlined in the present document when carried out on the processor.

According to a further aspect, a computer program product is described. The computer program may comprise executable instructions for performing the method steps outlined in the present document when executed on a computer.

According to another aspect, a system for testing a vehicle function of a (street) vehicle for use within a second operational design domain (ODD) using a set of test scenarios which represents a first ODD that differs from the second ODD is described. The system is configured to determine a difference measure for the (statistical) difference between a first (statistical) model for the first ODD and a second (statistical) model for the second ODD. Furthermore, the system is configured to determine (based on the difference measure) an indicator for the (additional) amount of testing that is to be performed for testing the vehicle function for the second ODD using the set of test scenarios for the first ODD. The indicator may indicate the additional hours and/or the additional number of test scenarios for testing the vehicle function for the second ODD (in order to test the vehicle function up to a pre-determined level of safety).

It should be noted that the methods and systems including its preferred embodiments as outlined in the present patent application may be used stand-alone or in combination with the other methods and systems disclosed in this document. Furthermore, all aspects of the methods and systems outlined in the present patent application may be arbitrarily combined. In particular, the features of the claims may be combined with one another in an arbitrary manner. Furthermore, it is noted that brackets are used within the present document to indicate optional features.

The invention is explained below in an exemplary manner with reference to the accompanying drawings, wherein
- Fig. 1 shows example components of a vehicle; and
- Fig. 2 shows a flow chart of an example method for testing a vehicle function.

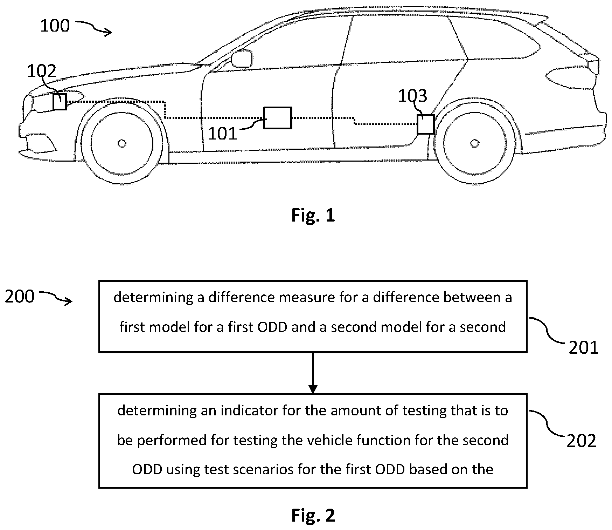

As outlined above, the present document is directed at adapting the ODD of a vehicle function in an efficient and reliable manner. In this context, Fig. 1 shows a vehicle 100 with a vehicle function that is configured to provide an autonomous longitudinal and/or lateral guidance of the vehicle 100. The vehicle function may be provided by a control unit 101 of the vehicle 100. The vehicle 100 comprises one or more environment sensor, such as a camera, a radar sensor, a lidar sensor, and/or an ultrasonic sensor, which are each configured to capture sensor data regarding the environment of the vehicle 100. The control unit 101 may be configured to analyze the sensor data, e.g., in order to identify one or more objects within the environment of the vehicle 100.

Furthermore, the vehicle 100 comprises one or more actuators 103 for the longitudinal and/or lateral guidance of the vehicle 100. Example actuators 103 are a propulsion engine or motor, a steering motor and/or breaking actuator. The control unit 101 may be configured to control the one or more actuators 103 in dependence of the sensor data of the one or more environment sensors 102 to provide the vehicle function.

The vehicle function may have a certain functional scope, such as performing an autonomous parking maneuver within a public parking area. The vehicle function may have been designed for a first ODD using a first set of test scenarios that represents the first ODD. The first ODD may be modeled using a first model, notably a first statistical model. The first model may comprise a set of variables. Example variables are
- one or more variables for one or more different types of vulnerable road users (VRU) which are present within the environment of the vehicle 100 during execution of the vehicle function;
- a variable for the illumination of the environment during execution of the vehicle function; and/or
- a distance between the vehicle 100 and a VRU during execution of the vehicle function.

The first model of the first ODD may comprise, notably may be, a Bayesian Network that comprises the set of variables.

The vehicle function may be tested using a first set of scenarios that is representative of the first ODD. In order to provide a sufficiently high level of safety, it may be required
- to test the vehicle function using a first number of different scenarios; and/or
- to test the vehicle function for a first number of hours.

It may be desirable to make the vehicle function available for a second ODD which differs from the first ODD. The second ODD may be modelled by a second (statistical) model, wherein the second model may comprise, notably may be, a Bayesian network that comprises the set of variables. By way of example, the first ODD may be a parking space within a public area, wherein the second ODD may be a parking space within a private area. Depending on the properties of the second ODD, it may not be possible to provide a sufficiently large second set of test scenarios that represents the second ODD, for testing the vehicle function for the second ODD at a sufficiently high level of safety.

In the present document it is suggested to make use of the first set of test scenarios for the first ODD to test the vehicle function for the second ODD. For this purpose, the first model for the first ODD is compared with the second model for the second ODD, in order to determine a difference measure for the (statistical) difference between the first ODD and the second ODD. The difference measure may comprise and/or may be dependent on
- data distribution shift between the first model and the second model;
- a maximum mean discrepancy (MMD) between the first model and the second model;
- a Kolmogorov-Smirnov (KS) test for the first and the second model; and/or
- a Kullback-Leibler (KL) divergence.

The difference measure may be used to determine the amount of testing that is to be performed for testing the vehicle function for the second ODD using the first set of scenarios, which is representative of the first ODD. By way of example, it may be required to perform a first amount of testing for testing the vehicle function for the first ODD using the first set of scenarios. The difference measure may be used to determine a factor that indicates the additional amount of testing (on top of the first amount) that is to be performed for testing the vehicle function for the second ODD using the first set of scenarios. The amount of testing may comprise
- the number of test scenarios that are to be used; and/or
- the hours of testing.

Typically, the additional amount of testing increases as the difference measure indicates an increasing (statistical) difference between the first model of the first ODD and the second model of the second ODD.

Fig. 2 shows a flow chart of an example (possibly computer-implemented) method 200 for testing a vehicle function of a vehicle 100 for use within a second operational design domain (ODD) using a set of test scenarios, which represents a first ODD, wherein the first ODD differs from the second ODD. The first ODD may be described using a first statistical model, wherein the first statistical model comprises a first set of statistical variables. The second ODD may be described using a second statistical model, wherein the second statistical model comprises a second set of statistical variables. The first model and the second model may comprise the same set of variables. In particular, all the statistical variables of the second model may be comprised within the first model.

The method 200 comprises determining 201 a difference measure for the difference between the first (statistical) model for the first ODD and the second (statistical) model for the second ODD. The difference measure may indicate the statistical difference between the first and the second model with regards to one or more statistical variables.

Furthermore, the method 200 comprises determining 202 an indicator for the (additional) amount of testing that is to be performed for testing the vehicle function for the second ODD using the set of test scenarios for the first ODD. The indicator may be determined based on the difference measure. A first amount of testing may need to be performed for testing the vehicle function for the first ODD in accordance to a pre-determined targe level of safety. The indicator may indicate the additional amount of testing that is to be performed for testing the vehicle function for the second ODD in accordance with the pre-determined target level of safety, while using the set of test scenarios which (statistically) represents the first ODD.

The indicator may be determined such that amount of testing that is to be performed for testing the vehicle function for the second ODD using the set of test scenarios for the first ODD
- increases with increasing difference between the first model and the second model (as indicated by the difference measure); and/or
- decreases with decreasing difference and/or with increasing similarity between the first model and the second model (as indicated by the difference measure).

The vehicle function may then be tested in accordance to the additional amount of testing that is indicated by the indicator, thereby allowing the ODD of the vehicle function to be modified in an efficient and reliable manner.

It should be noted that the description and drawings merely illustrate the principles of the proposed methods and systems. Those skilled in the art will be able to implement various arrangements that, although not explicitly described or shown herein, embody the principles of the invention and are included within its spirit and scope. Furthermore, all examples and embodiment outlined in the present document are principally intended expressly to be only for explanatory purposes to help the reader in understanding the principles of the proposed methods and systems. Furthermore, all statements herein providing principles, aspects, and embodiments of the invention, as well as specific examples thereof, are intended to encompass equivalents thereof.

## Claims

1. A method (200) for testing a vehicle function of a vehicle (100) for use within a second operational design domain, ODD, using a set of test scenarios which represents a first ODD that differs from the second ODD, wherein the method (200) comprises:
determining (201) a difference measure for a difference between a first model for the first ODD and a second model for the second ODD; and
determining (202) an indicator for an amount of testing that is to be performed for testing the vehicle function for the second ODD using the set of test scenarios for the first ODD based on the difference measure.

2. The method (200) of claim 1, wherein the first model and the second model each comprise a statistical model and/or a Bayesian network.

3. The method (200) of any one of the previous claims, wherein:
the first model and the second model comprise a joint set of variables, and
the first model and the second model differ with regard to a statistical distribution of one or more of the variables of the set of variables.

4. The method (200) of claim 3, wherein the set of variables comprises:
one or more variables for one or more different types of road users within an environment of the vehicle (100) during execution of the vehicle function,
one or more variables for an illumination of the environment of the vehicle (100) during execution of the vehicle function, and/or
one or more variables for a distance of the vehicle (100) to another road user during execution of the vehicle function.

5. The method (200) of any one of the previous claims, wherein the difference measure is determined based on:
a data distribution shift between the first model and the second model,
a maximum mean discrepancy between the first model and the second model,
a Kolmogorov-Smirnov (KS) test for the first and the second model, and/or
a Kullback-Leibler (KL) divergence.

6. The method (200) of any one of the previous claims, wherein the indicator is indicative of:
a number of different test scenarios to be used for testing the vehicle function, and/or
a number of hours to be used for testing the vehicle function.

7. The method (200) of any one of the previous claims, wherein a first amount of testing is to be performed for testing the vehicle function for the first ODD using the set of test scenarios for the first ODD, and wherein the indicator is indicative of:
an additional amount of testing that is to be performed on top of the first amount for testing the vehicle function for the second ODD using the set of test scenarios for the first ODD, or
a second amount of testing that is to be performed for testing the vehicle function for the second ODD using the set of test scenarios for the first ODD.

8. The method (200) of any one of the previous claims, wherein the method (200) comprises testing the vehicle function using the set of test scenarios for the first ODD according to the amount indicated by the determined indicator.

9. The method (200) of any one of the previous claims, wherein the vehicle function is configured to perform an autonomous longitudinal and/or lateral guidance of the vehicle (100).

10. A system for testing a vehicle function of a vehicle (100) for use within a second operational design domain, ODD, using a set of test scenarios which represents a first ODD that differs from the second ODD; wherein the system is configured to:
determine a difference measure for a difference between a first model for the first ODD and a second model for the second ODD; and
determine an indicator for an amount of testing that is to be performed for testing the vehicle function for the second ODD using the set of test scenarios for the first ODD based on the difference measure.

11. The system of claim 10, wherein the system is further configured to perform the method of any one of claims 2 to 9.
